# EUROPEAN PATENT APPLICATION

(11) **EP 0 632 566 A1**
(43) Date of publication of application: **04.01.1995**
(21) Application number: 94304798.5
(22) Date of filing: 30.06.1994
(51) Int. Cl.: H02K 9/22

(54) **Apparatus and methods for heat dissipation in electromechanical devices**

(30) Priority: 30.06.1993 US 85842
(71) Applicant: SIMMONDS PRECISION ENGINE SYSTEMS, INC., Akron, Ohio 44334-0501 (US)
(72) Inventor: Webb, Scot Adams, North Norwich, New York (US); Latta, John Basil, Sidney, New York 13838 (US); Utter, Dale Robert, Mt Upton, New York 13809 (US)
(74) Representative: Foster, David Martyn

(57) **Abstract**

A stator (10) having a plurality of windings (20) on a core (18) is disposed in a housing (12), and is fitted with a heat sink comprising a rigid thermally conductive element (42) in thermal contact with the housing (12), and means (46) for conducting stator heat away from the core and windings to the element (42).

## Description

### BACKGROUND OF THE INVENTION

The invention relates generally to electromechanical devices such as alternators, generators, motors and the like. More specifically, the invention relates to heat dissipation methods and apparatus for such devices.

Electromechanical devices are well known and commonly include a stator assembly and a rotor assembly. The stator includes a high magnetically permeable core, commonly formed as a laminated structure. The stator core further includes a back iron or yoke, usually cylindrical in shape, and a plurality of laminated stator teeth that generally extend radially inward from the back iron. Copper windings are formed and then installed on the stator teeth. An electrically insulating slot liner (ground insulation) is usually provided between each of the windings and the tooth that the winding surrounds.

After the stator core is assembled it is usually shrink fitted into a housing with a sufficiently tight tolerance so that the core does not rotate in the housing, and the housing can function as a heat sink. A varnish type compound is commonly added at this point to protect the stator components from deleterious effects of fluids such as oil etc. The varnish also helps to mechanically restrain the coils, and to enhance the conductive heat transfer radially through the windings.

The shrink fit assembly of the core in the housing can produce stress on the laminated core that tends to cause sections of the core laminations to buckle out of the plane of the core ends. To reduce this occurrence, an anti-buckling ring can be provided that is positioned on the outside end of the core contoured to the outer periphery of the back iron. This anti-buckling ring is narrow in width compared to the back iron thickness, thus providing virtually no heat sink contribution.

In most applications, particularly high power applications, the stator windings are used to carry the high currents used during operation. These high currents produce substantial I²R losses due to the resistance of the stator windings, thus producing substantial amounts of heat. If left unchecked, this heat can increase rapidly and significantly to the point of damaging the slot liner ground insulation, the winding insulation and even cause delamination of the core. Thus, the life and reliability of the electromechanical device is directly related to operating temperatures, specifically the thermal endurance of the insulation system. For example, the design of an alternator requires a trade off between weight and temperature, i.e. an alternator is designed to be as small and light weight as possible, while keeping the operating temperatures within design limits relative to operating life requirements.

In some applications, as another example, alternators may be used to supply power to shunting regulator type power supplies. In these applications, the stator windings are typically and effectively in a short circuit condition. This results in most of the heat being generated in the windings of the stator. This heat is dissipated typically by thermal conduction through the ground insulation, the core and the housing to the gearbox or other structure that the alternator is mounted on. The ground insulation presents the highest thermal resistance for heat dissipation--it is not uncommon for half to two-thirds of the temperature drop to occur across this insulation.

The need exists, therefore, for improved apparatus and methods for dissipating heat in electromechanical devices.

### SUMMARY OF THE INVENTION

The present invention thus contemplates, in one embodiment, the combination of a stator having a plurality of windings on a core, the stator being disposed in a housing and used as part of an electromechanical device; and a heat sink comprising a rigid thermally conductive element, the element being in thermal contact with the housing; and means for conducting stator heat away from the core and windings to the element.

The invention further contemplates the methods embodied in the use of such apparatus, as well as a method for assembling a stator for use in an electromechanical device having a housing, comprising the steps of:
a. forming a laminated core including a core back iron and stator teeth;
b. attaching a thermally conductive rigid heat sink to the core;
c. forming the stator windings and positioning the windings on respective stator teeth; and
d. shrink fit inserting the core and heat sink into the housing.

These and other aspects and advantages of the present invention will be readily understood and appreciated by those skilled in the art from the following detailed description of the preferred embodiments with the best mode contemplated for practicing the invention in view of the accompanying drawings.

### BRIEF DESCRIPTION OF THE DRAWINGS

Fig. 1 is a simplified schematic of a stator for an electromechanical device such as an alternator stator in partial longitudinal cross-section;
Fig. 2 is a perspective in partial section of a stator core with another embodiment of the invention used therewith;
Fig. 3 is a simplified representation of thermally conductive paths achieved by use of the present invention;
Fig. 4 is an schematic equivalent for the thermal resistivities present in the arrangement of Fig. 3;
Fig. 5 is a view similar to Fig. 1 for another embodiment of the invention shown in Fig. 2;
Figs. 6A and 6B show enlarged views of the winding arrangement on a core that includes an embodiment of the invention depicted in Figs. 2 and 5;
Fig. 7 is a view similar to Fig. 1 in partial longitudinal section of a stator assembly with another embodiment of the invention used therewith;
Fig. 8 is a perspective in partial section of the core shown in Fig. 7;
Figs. 9A and 9B are front and side views in more detail of a slot insert according to the invention as illustrated in use in Fig. 8, with the view taken from line A-A; and
Figs. 10A and 10B are front and side views in more detail of another slot insert design according to the invention as illustrated in use in Fig. 8, with the view taken from line B-B.

### DETAILED DESCRIPTION OF THE INVENTION

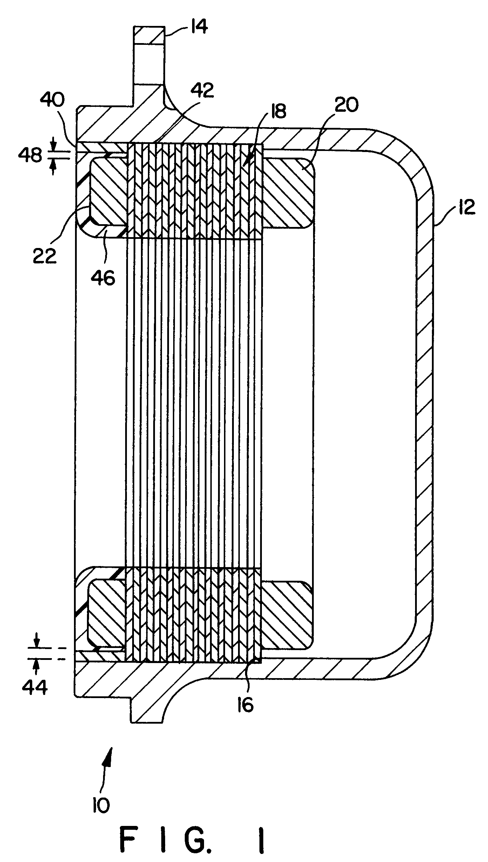

With reference to Fig. 1, a stator 10 for an electromechanical device such as an alternator is shown in partial section. Although the invention is described herein with specific reference to use of a stator for an alternator, those skilled in the art will appreciate that such description is simply for purposes of explanation, and should not be construed in a limiting sense. The invention can be used conveniently with any electromechanical device with which it is desired to improve the heat dissipation through the device.

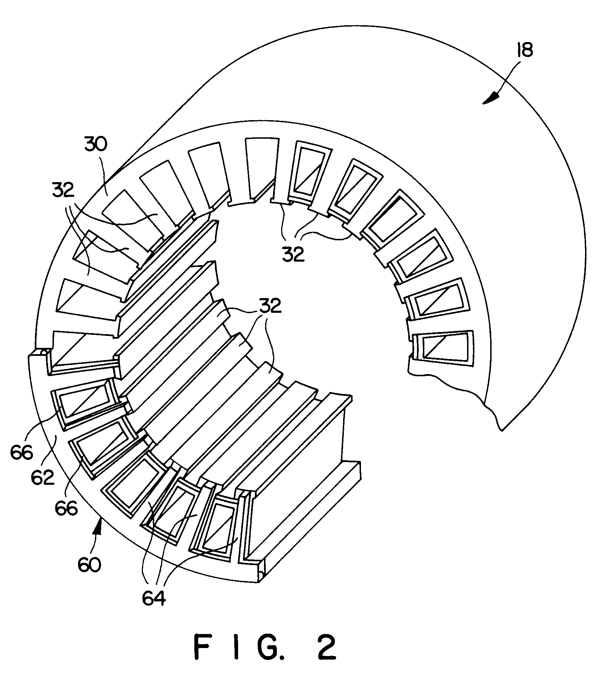

The stator 10 includes a housing 12 that typically is mountable on a gearbox or other structure (not shown) such as with a mounting flange 14. The inner surface of the housing 12 includes a shoulder 16 against which a core or back iron 18 is seated. The core 18 typically is shrink fit inserted into the housing 12 and includes a plurality of windings 20. As shown in greater detail in Fig. 2 (Fig. 2 illustrates another embodiment of the invention but shows certain features of a typical core more clearly), a typical core includes a back iron or yolk 30 with a plurality of inwardly and radially extended teeth 32. One or more of the 32 has a winding 20 thereon, usually made up of a plurality of wire loops. The core 18 including the teeth 32 is usually a laminated structure built up of a series of laminations of highly permeable magnetic material such as 3% silicon iron, per ASTM A677, for example. The laminated structure is formed by stacking the individual laminations in an axial direction.

Referring again to Fig. 1, in one embodiment of the invention a rigid ring 40, such as made of aluminum, is shrink fitted into the housing 12 and seated against an outer end 42 of the core 18. The ring 40 is preferably sized to extend longitudinally beyond the outer ends 22 of the windings 20. The thickness of the ring, indicated by the numeral 44, is selected depending on the size of the gap between the windings and the inner surface of the housing. After the ring is inserted into the housing, the remaining gap 48 between the ring 40 and the windings 20 should be small but not too small, otherwise, arcing or corona may occur depending on the voltage levels and dielectric strength of the insulation on the winding wires for a particular application. Allowance should also be made for tolerances required because the windings are usually pressed onto the teeth 32 so that precise control of the gap size between the windings and the back iron is often difficult and imprecise.

In accordance with the invention, the ring 40 is intended to serve at least two purposes. First, it acts as an antibuckling ring. The ring can be shrink fitted into the housing at the same time as the core if desired, and can first be adhesively attached to the core end 42 before insertion in the housing. The antibuckling feature is useful because when the laminated core is pressed into the housing under rather high pressure the laminations tend to buckle up.

The second function of the ring 40 is to help in the dissipation of heat generated inside the stator, primarily in the windings. In accordance with the invention, then, a thermally conductive epoxy or other suitable compound 46 is applied to fill the small gap 48 between the ring 40 and the windings 20. The compound 46 can further be applied over the outer ends of the windings as shown in Fig. 1. The compound 46 helps conduct heat from the windings to the thermally conductive ring 40 which, due to the shrink fit installation, is in good thermal contact with the housing.

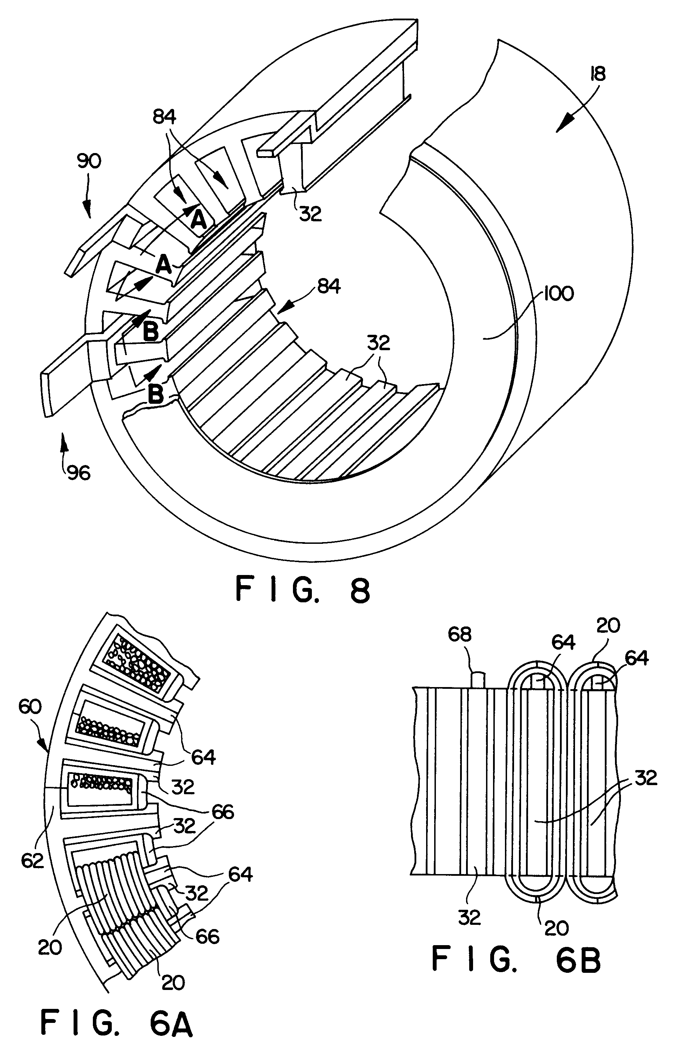

A suitable material for the thermally conductive compound is a thermally conductive epoxy such as TC-0118 available from EPIC Resins; however, this is but one example of a suitable material. The compound 46 improves the heat dissipation from the stator by creating a parallel conduction path to by-pass the higher thermal resistivity of the lamination stack and ground insulation (the ground insulation is shown in Figs. 2 and 6A as will be described shortly.) By reducing the size of the gap 48, the compound can be applied in a small quantity in the gap and will not degrade under thermal cycling which typically occurs in normal operation of an electromechanical device, particularly an alternator. Having a large gap filled with compound can cause the compound to degrade over thermal cycling due to shrinkage and/or mechanical stress resulting from mismatches in thermal expansion coefficients between the housing, the core and the compound. The compound 46 also helps decrease the occurrence of corona and arcing. A suitable gap of 0.03 in. has been used successfully for a ring having a thickness of 0.09 in., but this is but one example. The allowable gap size will be determined for each application according to the criteria identified hereinbefore, as well as the particular compound selected, the materials used for the housing and core, and the temperature cycling characteristics for each application.

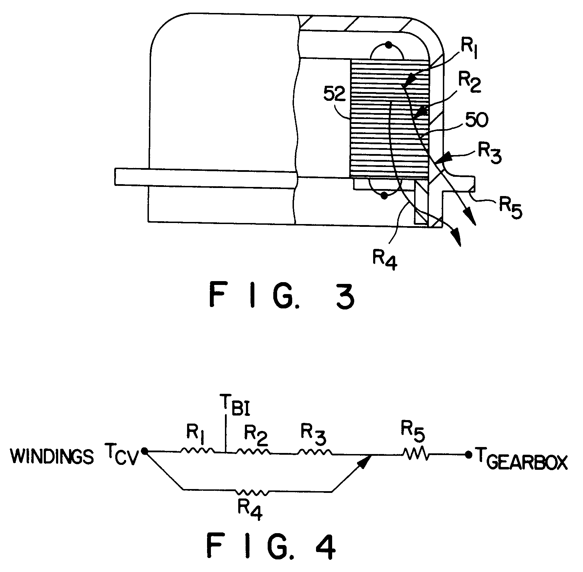

Referring to Fig. 3, there is illustrated in a simplified manner the parallel thermal dissipation path concept of the present invention as described above. In a conventional stator, the thermal dissipation path is generally represented by the line 50. This thermal path includes three main sections labelled R₁, R₂ and R₃. R₁ represents the thermal resistance of the ground insulation. R₂ represents the thermal resistance of the back iron, and R₃ represents the thermal resistance of the housing, the latter typically being rather low. R₅ is the interface resistance from the housing to the mounting structure (e.g., a gearbox). Typically, half to two-thirds of the temperature drop is across the resistance R₁.

Line 52 represents the parallel heat dissipation path introduced by use of the invention (not only for the embodiment of Fig. 1, but other embodiments as well.) The thermal resistance of this path is rather low and represented by R₄. This thermal path is low in resistance because of the good thermal conductivity between the winding area and the housing (which in the Fig. 1 embodiment is achieved by the use of the compound 46 and the ring 40), as well as the fact that heat can be conducted in the preferred direction of the lamination stack out to the compound 46, thereby also bypassing the high thermal resistivity of the back iron. In Fig. 4, the schematic equivalent of the thermal conductivity model shown in Fig. 3 is provided. The temperature T_{cu} represents the temperature generated in the copper windings and Tₒ represents the temperature at the gearbox (or other structure the housing is attached to) and can generally be viewed as a thermal ground or heat sink. As shown, the parallel path provided by thermal resistance R₄ by-passes the higher thermal resistance of a conventional stator.

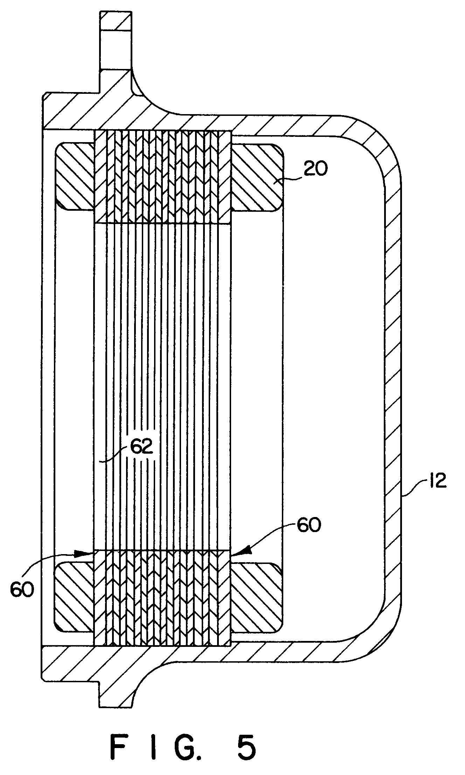

With reference next to Figs. 2 and 5 (in which like numerals are used to designate like parts shown in the other figures), in another embodiment of the invention, the antibuckling ring is modified to include a plurality of fingers that coextend with the laminated teeth of the core. As shown in the drawings, a ring 60 serves as an antibuckling ring and can be attached to the core 18 by adhesive or other suitable means if desired to simplify assembly. Preferably, the ring 60 is shrink fitted into the housing 12 at the same time as the core 18. A ring 60 can be provided at each end of the core to draw heat away from the core at the inside of the stator as well as the outside (Fig. 5.) The ring 60 includes a main body 62 and a plurality of radially inwardly extended fingers 64 which preferably are arranged to overlay coextensively with the top surfaces of the core teeth 32. Note how with this arrangement the ring 60 can help prevent buckling of the teeth 32 as well as the back iron 30. The ring 60 can be made of any suitable material that is thermally conductive, such as aluminum for one example. The ring can be laser cut, wire EDM cut, casted or formed by any other convenient method. The fingers 64 draw heat from the region of the windings, again completely by-passing the lamination stack and the ground insulation, as well as the back iron. The shrink fit of the ring in the housing provides good thermal conductivity to the housing and heat sink mounting structure such as a gearbox.

Figs. 6A and 6B show enlarged detail of the core teeth and ring assembly with windings thereon. Fig. 6A is a partial end view of the core, and Fig. 6B is a partial view of the interior of the stator in elevation. As in most stator designs, a ground insulation or slot liner 66 such as a layer of Nomex™ or Kapton™ is provided to insulate the windings 20 from the core 18. As shown in Fig. 6B, because the windings 20 are slipped onto the teeth and also over the fingers 64, the fingers are provided with a radius 68 so as not to cut the windings. Also, the windings 20 should be electrically insulated from the fingers 64, and this can be accomplished in many different ways. For example, the ring 60 could be anodized, or an insulator could be disposed between the windings and the fingers, to name just two examples.

Assembly of the stator of Figs. 2 and 5 is as follows. The windings are formed in a conventional manner on a mandrel or other suitable means. The ring 60 is attached to the core end(s) such as with an adhesive. After the slot liners are installed, the windings are then slipped onto the teeth, and the core assembly is shrink fit into the housing. The entire assembly then has a varnish such as Emerson & Cuming W-66 applied over the windings which is used in a conventional manner to protect the windings if needed for a particular application. A thermally conductive varnish can be used. A thermally conductive compound (not shown) such as previously described herein may also be applied to improve heat transfer from the windings to the ring 60, if desired.

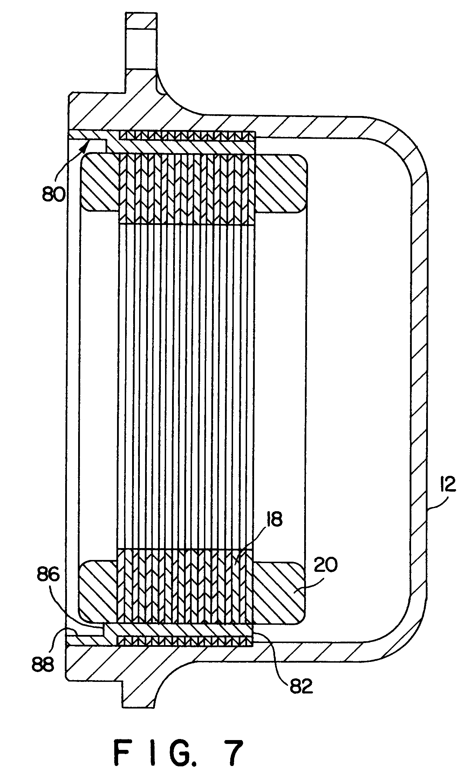

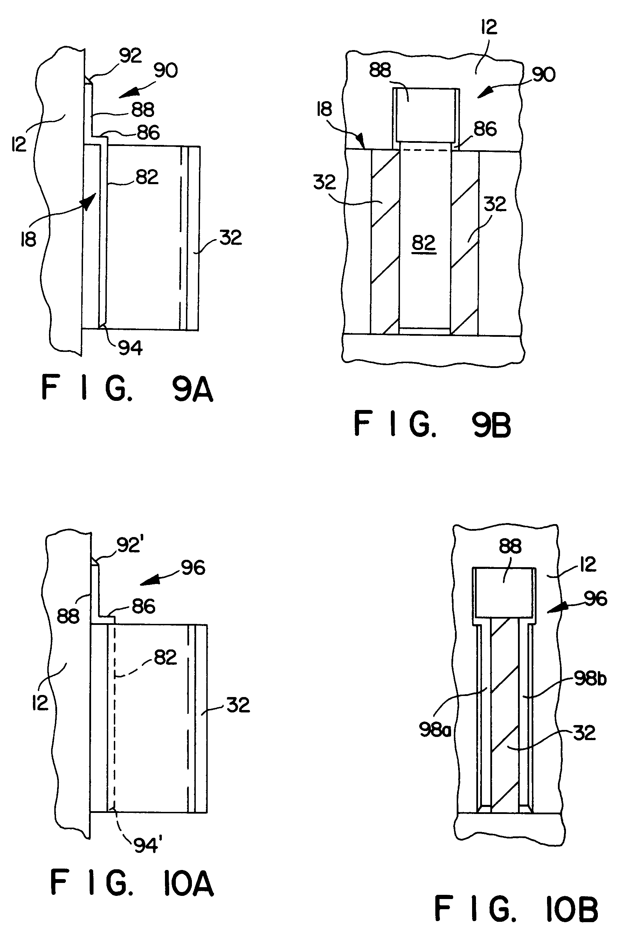

With reference next to Figs. 7 and 8, another embodiment of the invention is illustrated (in the drawings related to this embodiment the windings are omitted for clarity.) In this embodiment, the core 18 is again shrink fitted into the housing 12. The heat dissipation is accomplished with a series of stator slot insert elements 80. Each insert 80 includes three basic parts. A first part 82 extends longitudinally down into a stator slot 84 defined by the area between two adjacent stator teeth 32. The longitudinal first part 82 is joined with a second part 86 that overlays the back iron end 42. The third part 88 extends from the second part along the housing 12 inner surface. Each insert can be an integral unit, for example, or can be made of individual parts built up into a single unit if desired, to name just two examples. For instance, the second parts 86 could in practice be realized by the use of antibuckling ring that seats against the back iron end. The extended first and third parts can then be simply attached to the ring by brazing or other suitable means. Another alternative is that the inserts can simply be individual parts that are separately attached to the housing (see Fig. 8.)

In Fig. 8, two exemplary types of slot inserts are illustrated. The first type 90 can conveniently be used in a slot defined between two teeth 32 of the core 18, particularly when windings are to be placed on the teeth. As best shown in Figs. 9A and 9B, the insert first part 82 extends down into the area between two core teeth 32. The insert 90 may be brazed, welded or otherwise attached by other suitable means as at 92 to the housing 12. This attachment provides good heat transfer characteristics and also allows the insert to function as an antirotation device for the core inside the housing. As shown, the first part 82 preferably extends along the inner surface of the back iron, and can draw heat away from the surrounding windings out to the housing, by-passing the high thermal resistance of the laminations. The insert 90 preferably includes a chamfer 94 so that the windings can be slipped onto the core teeth without being cut by the inner end of the insert. Also, the inserts can be installed in the core before the ground insulation is inserted, thus allowing the ground insulation to isolate the windings from the inserts. Again, a thermally conductive varnish and/or compound can be applied to enhance heat transfer from the winding region to the insert and out the unit.

Another insert design 96 is also shown in Fig. 8, and in more detail in Figs. 10A and 10B. This design is useful, for example, with a core tooth that is empty i.e. has no winding thereon for the particular stator application. In this case, the first part 82 is forked to fit over the tooth with two portions 98a and 98b thereof extending into the slots defined between adjacent teeth. The insert 96 can be provided with a chamfered end 94' as with the first insert design, and can be attached to the housing in a similar manner as at 92'. With the insert 90,96 embodiment, the inserts are preferably relatively thin pieces (and could be formed by punched metal sheets) so as not to occupy space needed for the copper windings.

In all the embodiments described herein, a protective layer 100, such as, for example, Kapton™, can be applied over the outer end of the assembly to protect the windings.

An important advantage of the present invention is that by substantially improving the heat transfer out of the electromechanical device, the stator can be reduced in size and weight for a given maximum operating temperature.

While the invention has been shown and described with respect to specific embodiments thereof, this is for the purpose of illustration rather than limitation, and other variations and modifications of the specific embodiments herein shown and described will be apparent to those skilled in the art within the intended spirit and scope of the invention as set forth in the appended claims.

## Claims

1. In combination with a stator having a plurality of windings on a core, said stator being disposed in a housing and used as part of an electromechanical device: a heat sink comprising a rigid thermally conductive element, said element being in thermal contact with the housing; and means for conducting stator heat away from the core and windings to said element.

2. The combination of claim 1 wherein said element comprises a metal ring end-lamination in contact with one end of the core, said ring having an outer perimeter flush with the core outer diameter.

3. The combination of claim 2 wherein said ring comprises an antibuckling ring shrink fit into the housing adjacent to one end of the core.

4. The combination of claim 3 wherein said ring has an axial length such that said ring extends axially beyond the windings, and has a radial depth that defines a predetermined gap between said ring and the windings.

5. The combination of claim 4 wherein said conducting means comprises a thermally conductive compound that substantially fills said gap.

6. The combination of claim 5 wherein said compound comprises a thermally conductive epoxy.

7. The combination of claim 6 wherein said ring is brazed or welded to the housing.

8. The combination of claim 2 wherein said conducting means comprises fingers that extend radially inward from said ring along stator teeth about which the windings are disposed.

9. The combination of claim 8 wherein said fingers are integrally formed with said ring, each of said fingers extending adjacent a respective stator tooth and under a respective winding disposed on the respective tooth.

10. The combination of claim 9 wherein said fingers have rounded edges to prevent cuts to insulation of said windings.

11. The combination of claim 10 wherein said ring is attached to one end or both ends of the core prior to the core being installed in the housing.

12. The combination of claim 11 wherein said ring is adhesively attached to the core back iron.

13. The combination of claim 12 wherein said ring and the core are shrink fit into the housing.

14. The combination of claim 1 wherein said element and conducting means comprise a plurality of stator slot inserts, each of said inserts comprising a first part attached to the housing, a second part that extends into a respective stator slot between two stator teeth, and a third part that connects said first and second parts.

15. The combination of claim 14 wherein said insert first part is welded to the housing.

16. The combination of claim 14 wherein each said insert third part functions as an antibuckling member when the core is shrink fit into the housing.

17. The combination of claim 16 wherein each said insert second part is disposed adjacent the core back iron inner perimeter.

18. The combination of claim 17 wherein each of said inserts is an integral piece of aluminum.

19. The combination of claim 1 wherein said element and said conducting means provide a parallel and higher thermally conductive heat transfer path between the housing and stator interior as compared to the core teeth and back iron heat transfer path.

20. A method for assembling a stator for use in an electromechanical device having a housing, comprising the steps of:
a. forming a laminated core including a core back iron and stator teeth;
b. attaching a thermally conductive rigid heat sink to the core;
c. forming the stator windings and positioning the windings on respective stator teeth; and
d. shrink fit inserting the core and heat sink into the housing.

21. A heat sink for a stator used in an electromechanical device wherein the stator core includes a yoke and teeth for windings disposed thereon, said heat sink comprising a peripheral portion having an outer contour sized to the stator yoke periphery, and fingers that extend from said peripheral portion with a pattern determined by the stator teeth, such that the heat sink can be attached to an end of the core to overlay adjacently said yoke and teeth.

22. The heat sink of claim 21 wherein the heat sink is an integral piece of aluminum, and the stator comprises a laminated core.
